# EUROPÄISCHE PATENTANMELDUNG

(11) **EP 3 085 222 A1**
(43) Veröffentlichungstag der Anmeldung: **26.10.2016**
(21) Anmeldenummer: 16165759.8
(22) Anmeldetag: 18.04.2016
(51) Int. Cl.: A01F 15/18

(54) **LANDWIRTSCHAFTLICHE RUNDBALLENPRESSE**

(30) Priorität: 21.04.2015 DE 102015207203
(71) Anmelder: Deere & Company, Moline, IL 61265 (US)
(72) Erfinder: Chapon, Emmanuel, 70100 Velet (FR)
(74) Vertreter: Reichert, Christian

(57) **Zusammenfassung**

Eine Landwirtschaftliche Rundballenpresse (10) ist offenbart. Die Rundballenpresse (10) umfasst eine Ballenpresskammer (20) aus mehreren angetriebenen und über einen Umfang der Ballenpresskammer (20) angeordneten Pressrollen (26) mit einer zylindrischen Mantelfläche (38), wobei auf der Mantelfläche (38) der Pressrollen (26) Rippen (42) ausgebildet sind, die sich im Wesentlichen parallel zu der Rotationsachse (41) einer Pressrolle (26) erstrecken. Um den Erntevorgang, insbesondere für trockenes und/oder kurzstängeliges Erntegut, zu optimieren, wird vorgeschlagen, dass über dem Umfang der Ballenpresskammer (20) wenigstens 18 Pressrollen (26) angeordnet sind, wobei wenigstens einige der 18 Pressrollen (26) mit 11 bis 13 Rippen (42) ausgebildet sind.

## Beschreibung

Die Erfindung betrifft eine landwirtschaftliche Rundballenpresse mit einer Ballenpresskammer aus mehreren angetriebenen und über einen Umfang der Ballenpresskammer angeordneten Pressrollen mit einer zylindrischen Mantelfläche, wobei auf der Mantelfläche der Pressrollen Rippen angeordnet sind, die sich im Wesentlichen parallel zu der Rotationsachse einer Pressrolle erstrecken.

Landwirtschaftliche Rundballenpressen sind bekannt. Dabei wird in Rundballenpressen landwirtschaftliches Erntegut, beispielsweise Stroh, Gras oder Getreide zu einem Rundballen geformt und mit einem Umwicklungsmaterial, beispielsweise Netz, Folie oder Bindegarn, umwickelt. Derartige Rundballenpressen weisen eine Aufnahme- und Zuführeinrichtung für das zu pressende Erntegut auf, durch welche das Erntegut in eine Zuführöffnung einer Ballenpresskammer eingeführt wird. Die Ballenpresskammer umfasst mehrere in einem Kreis angeordnete Pressrollen, die sich über die Breite der Ballenpresskammer zwischen zwei Seitenwänden erstrecken und rotatorisch angetrieben sind. Zur besseren Mitnahme bzw. besseren Beförderung des in die Presskammer eingeführten Ernteguts sind die Pressrollen mit mehreren über den Umfang der Pressrollen verteilte Rippen versehen, die sich in radiale Richtung erstreckende Erhebungen darstellen und sich über die Länge der Pressrolle erstecken. Oftmals kommt es jedoch in dieser Anordnung und Ausgestaltung von Pressrollen, insbesondere bei trockenen Erntebedingungen und bei kurz geschnittenem Erntegut, zu einer mangelnden Presswirkung, die davon herrührt, dass das Erntegut nicht ausreichend von den Pressrollen aufgenommen bzw. mitgenommen wird und der Rundballen während eines Pressvorgangs nicht oder nur unzureichend in Rotation gehalten werden kann. Dies führt, neben einer schlechten bzw. unzureichenden Ballenbildung, auch zu Problemen bei einem anschließenden Garn- oder Netzbindung, da das Netz- bzw. Garn nicht ordnungsgemäß vom Ballen mitgenommen wird.

Zur Überwindung des geschilderten Problems werden von namhaften Herstellern bereits Rundballenpressen mit unterschiedlichen Kombinationen von Pressrollen und Rippen angeboten, wobei die Pressrollen in Größe und Anzahl und die Anzahl der Rippen auf den Pressrollen variieren. Ferner ist es auch bekannt, die meist aus Metall hergestellten Pressrollen mit einer haftungssteigernden Ummantelung, beispielsweise Gummi, zu versehen, was jedoch teuer, aufwändig und verschleißanfällig ist. Trotz vielseitiger Anstrengungen und aufwändiger Versuche seitens der Hersteller von Rundballenpressen sind gemäß dem Stand der Technik für besonders trockene Erntebedingungen und/oder für das Pressen von besonders kurz geschnittenem Erntegut mit den oben genannten Maßnahmen bisher nur sub-optimale Ergebnisse erzielt worden. So weisen bekannte Anordnungen von Rundballenpressen für ein Rundballenmaß von 1,25m bis 1,35m Innendurchmesser eine Anzahl von 17 bis 18 auf dem Umfang der Rundballenpresskammer verteilte Pressrollen auf, wobei die Pressrollen mit nicht mehr als 10 Rippen auf ihrer Mantelfläche versehen sind. Ferner sind auch Ballenpressen mit Pressrollen mit 12 oder mehr auf der Mantelfläche angeordneten Rippen bekannt, wobei derartige Rundballenpressen dann weniger als 17 bis 18 Pressrollen auf dem Umfang der Ballenpresskammer verteilt besitzen. Die genannten, im Stand der Technik bekannten Rundballenpressen sind dabei auf Entegut mit einer durchschnittlichen Feuchtigkeit und Schnittlänge ausgerichtet und insbesondere nicht für das Pressen von trockenem und kurzstängeligem Erntegut optimiert.

Die der Erfindung zugrunde liegende Aufgabe wird darin gesehen, eine Pressrolle der eingangs genannten Art anzugeben, durch welche ein Ballenpressvorgang für trockenes und/oder kurz geschnittenes Erntegut verbessert wird.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß weist eine landwirtschaftliche Rundballenpresse über den Umfang der Ballenpresskammer wenigstens 18 Pressrollen auf, wobei wenigstens einige der 18 Pressrollen mit 11 bis 13 Rippen ausgebildet sind. Aufwändige Versuche unter Variation der beanspruchten Größen (Anzahl der Pressrollen und Anzahl der Rippen auf den Pressrollen) haben überraschend ergeben, dass eine Ballenpresse mit den oben genannten Parametern für trockenes und/oder kurz geschnittenes Erntegut wesentlich bessere Ballenpressergebnisse erlaubt als herkömmliche, auf dem Markt erhältliche Ballenpressen. Die oben genannte Kombination von Pressrollenanzahl und Rippenanzahl stellt einen Optimierungsbereich für trockenes und/oder kurzstängeliges bzw. kurzgeschnittenes Erntegut dar, beispielsweise kurzgeschnittenes Stroh oder Heu. Die Mitnahmewirkung der Rippen beeinflusst entscheidend die Pressdichte des Rundballens, so dass bei einer unzureichenden Mitnahme des Ernteguts im Pressvorgang Rundballen mit zu geringer Pressdichte entstehen. Bei der Auswahl der Anzahl der Pressrollen bzw. der Rippen ist zu bedenken, dass der Durchmesser der Pressrollen bei gleichem Innendurchmesser eines Pressraums maßgeblich die Anzahl der auf dem Umfang verteilten Pressrollen bestimmt, wobei mit zunehmendem Durchmesser der Pressrollen auch die Anzahl der Pressrollen auf dem Umfang der Ballenpresskammer abnehmen muss. Andererseits ist auch bei gleicher Anzahl von Rippen auf der Mantelfläche einer Pressrolle der Abstand zu den Rippen auf dem Umfang der Pressrolle maßgeblich von dem Durchmesser der Pressrolle bestimmt, wobei bei gleicher Rippenanzahl mit zunehmendem Durchmesser der Pressrolle auch der Abstand der Rippen zueinander anwächst. Bekannter Weise beeinflusst Letzteres entscheidend die Mitnahmewirkung des Ernteguts beim Pressvorgang, so dass bei zu großen oder auch zu kleinen Abständen zwischen den Rippen einer Pressrolle die Mitnahmewirkung beim Pressen des Rundballens verschlechtert werden kann. Gleiches gilt für die Anzahl der Rollen auf dem Umfang der Ballenpresskammer, da mit zunehmender Anzahl von Pressrollen auch die Anzahl der auf den Umfang des Rundballens eingreifenden Rippen zunimmt bzw. die Abstände der auf den Umfang des Rundballens eingreifenden Rippen zueinander abnehmen. Auch hier beeinflusst Letzteres entscheidend die Mitnahmewirkung des Ernteguts beim Pressvorgang, so dass bei zu großen oder zu kleinen Abständen zwischen den auf den Umfang des Rundballens eingreifenden Rippen sich die Mitnahmewirkung verschlechtern kann. Somit ergeben sich eine Vielzahl von Parametern, die auf die auf den Ballenpressvorgang bzw. der Ballenpressqualität Einfluss nehmen können, sei es die Trockenheit des Ernteguts, dessen Schnittlänge, die Anzahl der Rippen auf den Pressrollen, die Anzahl der Pressrollen auf dem Umfang der Ballenpresskammer, der Durchmesser der Pressrollen, der Durchmesser der Presskammer bzw. des Rundballenmaßes, der Abstand der Rippen auf der Mantelfläche der Pressrollen sowie der Abstand der Rippen zueinander, die auf den Umfang des Rundballens einwirken. Die genannten Parameter stehen dabei nur teilweise in Wechselwirkung und stellen eine für Versuchsreihen nur sehr schwer systematisch abprüfbare Variantenvielfalt dar. Die oben genannte Kombinationsauswahl von 18 Pressrollen und 11 bis 13 Rippen stellt dabei eine Kombination dar, die ein Fachmann nicht durch einfaches Ausprobieren wählen würde, da insbesondere die Problemstellung, eine weitere Optimierung für trockenes und/oder kurzgeschnittenes Erntegut zu erzielen, bisher nicht verfolgt wurde und daher sehr speziell ist. Insbesondere weisen die im Stand der Technik bekannten Kombinationen darauf hin, dass eine optimale Arbeitsweise bei Rundballenpressen, die mit einer Anordnung von 18 Pressrollen arbeiten, generell mit weniger als 11 Rippen pro Pressrolle bereits vermutet wurde. Ferner auch aufgrund der Variantenvielfalt ist es daher unwahrscheinlich, dass ein Fachmann durch simples Ausprobieren unweigerlich zu dem gleichen Ergebnis kommt. Man kann daher von einer Überraschende Wirkung bzw. einem überraschenden Effekt ausgehen, die bzw. der durch die oben genannte Auswahl der Parameter erzielt wird. Es hat sich dabei herausgestellt, dass insbesondere für trockenes und kurzgeschnittenes Erntegut andere Parametervariationen einschlägiger sind als für Erntegut, welches unter durchschnittlichen Bedingungen (durchschnittliche Feuchte, durchschnittliche Schnittlänge) geerntet wird. Für die speziellen Bedingungen mit trockenem und/oder kurzgeschnittenem Erntegut zeichnet sich daher durch die oben genannte Kombinationsauswahl in überraschender Weise ein Bereich ab, der einen Optimierungsbereich darstellt, welcher nicht zwingend durch eine systematische Vorgehensweise ergründbar ist. Mit der genannten Kombinationsauswahl können Pressergebnisse erzielt werden, die deutlich über den Erwartungen liegen, die mit herkömmlichen Rundballenpressen bei trockenem und/oder kurzstängeligem Erntegut erreicht werden können. Auch dem eingangs genannten Problem bei der Garn- oder Netzbindung, das bei zu geringer Pressdichte auftreten kann, wird abgeholfen. Die oben beschriebene Ausbildung einer Rundballenpresse eignet sich insbesondere für landwirtschaftliche Rundballenpressen mit konstanter Presskammer, wobei hier der Einsatz bei trockenem und kurzstängeligem Erntegut im Vordergrund steht.

Besonders gute Ergebnisse hinsichtlich der Pressballendichte, der Pressballenform, sowie der Garn- oder Netzbindung können mit Rundballenpressen mit Pressrollen mit 12 Rippen erzielt werden, wobei auch der Grenzbereich von 11 bzw. 13 Rippen noch deutlich bessere Ergebnisse liefert, als erwartet würde.

Die Rippen können sich im Wesentlichen über die gesamte Länge der Pressrollen erstrecken. Die Rippen auf der Mantelfläche der Pressrolle Rollenkörpers können durch streifenförmige Bänder ausgebildet sein. Dabei kann es sich beispielsweise um Stahl- bzw. Blechstreifen handeln die in Längsrichtung oder auch spiralförmig entlang der Länge des Rollenkörpers aufgeschweißt sind. Es ist ebenfalls denkbar, die Rippen direkt in das Mantelflächenmaterial durch beispielsweise ein Blechumformverfahren auszubilden. Ebenfalls ist es denkbar die Rippen durch aneinander gereihte Noppen auszubilden, ebenfalls aufgeschweißt oder durch geeignete Blechumformung.

Die Ballenpresskammer ist vorzugsweise mit einem Innendurchmesser von 1,20m bis 1,40m ausgebildet, welcher durch die Anordnung der Pressrollen und deren Rundmaße im Außendurchmesser ihrer Mantelflächen in dem genannten Bereich variieren kann.

Vorzugsweise ist für besonders gute Ergebnisse bei der Kombinationsauswahl von 18 Pressrollen und 11 bis 13 Rippen die Ballenpresskammer mit einem Innendurchmesser von 1,25m bis 1,35m ausgebildet.

Die Pressrollen weisen bei der Kombinationsauswahl von 18 Pressrollen und 11 bis 13 Rippen vorzugsweise eine Mantelflächen mit einem Außendurchmesser von etwa 200mm bis 240mm auf, damit sich der genannte Durchmesserbereich der Ballenpresskammer durch die Anordnung der Pressrollen auf dem Umfang der zylindrischen Presskammmer einstellt.

Vorzugsweise weisen die Pressrollen eine Mantelfläche mit einem Außendurchmesser von etwa 220mm auf.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

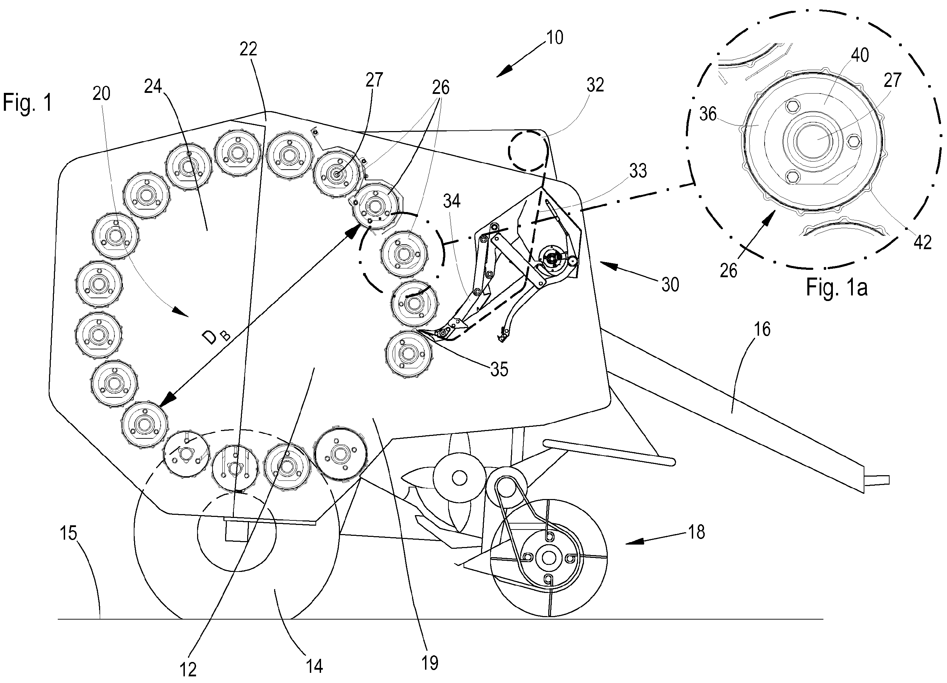

- Fig. 1: eine schematische Seitenansicht einer landwirtschaftlichen Rundballenpresse mit Pressrollen,
- Fig. 1 a: einen vergrößerten Ausschnitt einer der Pressrollen der landwirtschaftlichen Rundballenpresse aus Figur 1 und
- Fig. 2: eine schematische perspektivische Seitenansicht einer Pressrolle aus Figur 1.

Eine in der Figur 1 schematisch dargestellte Rundballenpresse 10 umfasst einen ersten Gehäuseteil 12, der sich mittels Rädern 14 auf einem Boden 15 abstützt und mittels einer Deichsel 16 an ein nicht gezeigtes Zugfahrzeug, z. B. einen Ackerschlepper, anschließbar ist.

An einer in Vorwärtsfahrtrichtung vorderen unteren Seite des ersten Gehäuseteils 12 befindet sich in bekannter Weise eine Aufnahme- und Zuführeinrichtung 18 für Erntegut, die geschnittenes Erntegut durch einen Einführkanal 19 in eine Ballenpresskammer 20 fördert, wobei der erste Gehäuseteil 12 einen vorderen Teil der Ballenpresskammer 20 umgibt. An dem rückwärtigen oberen Eckbereich des ersten Gehäuseteils 12 befindet sich ein Lager 22 für ein schwenkbares zweites Gehäuseteil 24, das einen hinteren Teil der Ballenpresskammer 20 umgibt. Das zweite Gehäuseteil 24 gibt im geöffneten Zustand (nicht gezeigt) einen Auslass (nicht gezeigt) frei, durch welchen ein von der Rundballenpresse 10 gepresster Ballen (nicht gezeigt) abgesetzt bzw. entladen oder ausgeworfen werden kann. Das schwenkbare zweite Gehäuseteil 24 kann mittels Stellmotoren (nicht gezeigt) betätigt werden (geöffnet und geschlossen werden) und stellt somit eine Auslassklappe für einen in der Ballenpresskammer 20 gepressten Ballen dar.

Die Rundballenpresse 10, mit größenunveränderlicher Ballenpresskammer 20 ausgebildet, enthält eine Vielzahl zueinander parallel verlaufender Pressrollen 26 zum Pressen von Erntegut (exemplarisch wurden hier nur einige wenige Pressrollen 26 mit dem Bezugszeichen "26" versehen), deren Rollachsen 27 bei geschlossenem zweiten Gehäuseteil 24 auf einem Kreisbogen gelegen sind, und von denen wenigstens einige angetrieben sind. Die Pressrollen 26 dienen, neben einem Pressen und einer Formgebung, insbesondere auch einer Rotationserzeugung oder einer Rotationserhaltung eines in der Presskammer 20 enthaltenen Rundballens (nicht gezeigt).

Ferner umfasst die Rundballenpresse 10 eine Ballenwickeleinrichtung 30, die mit Vorratsrolle 32 für Umwicklungsmaterial 33 bestückt ist. Als Umwicklungsmaterial kann vorzugsweise ein Netz oder auch Folie eingesetzt werden. Die Ballenwickeleinrichtung 30 umfasst eine Zuführeinrichtung 34 für das Umwicklungsmaterial 33, mittels welcher das Umwicklungsmaterial 33 von der Vorratsrolle 32 durch eine Einführöffnung 35 in die Ballenpresskammer 20 geführt wird.

Nachdem der eigentliche Pressvorgang, also die Erntegutaufnahme und Bildung eines Rundballens durch die Pressrollen 26, abgeschlossen ist, wird eine Fahrt über den Boden 15 unterbrochen, da die Rundballenpresse 10 mit dem Rundballen gefüllt ist und kein weiteres Erntegut mehr in die Ballenpresskammer 20 aufgenommen werden soll bzw. kann. Zu dieser Zeit wird auch die Ballenwickeleinrichtung 30 aktiviert, und ein sich dem Pressvorgang anschließender Umwicklungsvorgang eingeleitet. Dabei wird durch eine anhaltende Drehung des sich in der Ballenpresskammer 20 befindlichen Rundballens das Umwicklungsmaterial 33 um den Rundballen 20 gewickelt. Nachdem ein Umwicklungsvorgang abgeschlossen ist wird der Rundballen durch Öffnen der Auslassklappe (zweiter Gehäuseteil 24) über einer Entladerampe (nicht gezeigt) auf dem Boden 15 abgelassen. Sodann wird die Fahrt mit der Rundballenpresse 10 wieder aufgenommen und ein neuer Pressvorgang beginnt.

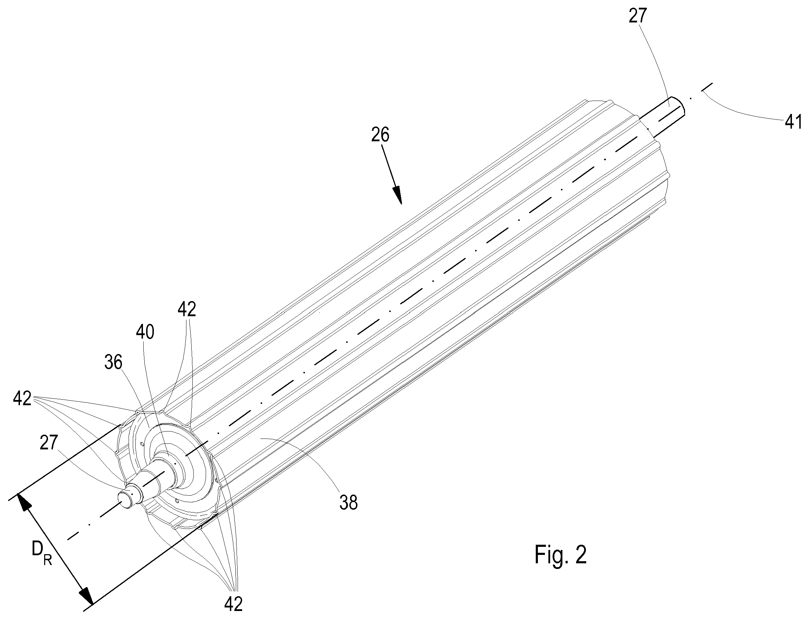

Eine der Pressrollen 26 der landwirtschaftlichen Rundballenpresse aus Figur 1 ist in einem vergrößerten Ausschnitt in Figur 1 a dargestellt. Eine perspektivische Seitenansicht ist in Figur 2 dargestellt.

Wie in den Figuren 1a und 2 im Detail dargestellt ist, umfasst eine Pressrolle 26 einen Rollenkörper 36, der von einer Mantelfläche 38 in Umfang und Länge umschlossen wird. Der Rollenkörper 36 ist als zylindrisches Rohrprofil ausgebildet und kann beispielsweise aus einem Blechmaterial in einem Umformverfahren bzw. Walzverfahren geformt sein. Der Rollenkörper 36 weist an seinen Endbereichen Achsnaben 40 auf, die in das Rohrprofil eingepasst sind und der Halterung bzw. Lagerung der Rollachsen 27 dienen. Die Rollachsen sind entlang einer Rotationsachse 41 ausgerichtet.

Auf der Mantelfläche 38 sind Rippen 42 angeordnet, die durch auf bzw. in der Mantelfläche 38 ausgebildete streifenförmige oder faltenförmige Erhebungen gebildet werden. Die Erhebungen erstrecken sich entlang der Rotationsachse 41 (Längsachse) des Rollenkörpers 36 über im Wesentlichen die gesamte Länge des Rollenkörpers 36. Die Erhebungen können beispielsweise durch ein Blechumformverfahren in das Blechmaterial des Rollenkörpers 36 eingeformt oder auch durch Aufschweißungen von Blechstreifen auf die Mantelfläche 38 aufgebracht werden.

Das in den Figuren 1 bis 2 dargestellte Ausführungsbeispiel zeigt Pressrollen 26 mit 12 Rippen 42, wobei die Rundballenpresse 10 insgesamt 18 Pressrollen 26 aufweist, die in der Presskammer 20 zum Pressen des Ernteguts zum Einsatz kommen. Wie in Figur 1 zu sehen ist, müssen nicht alle der 18 Pressrollen 26 mit 12 Rippen 42 bestückt sein, insbesondere nicht diejenigen, die neben einer Ballenmitnahme- und Formgebungs- bzw. Pressfunktion auch noch weitere Funktionen innehaben und beispielsweise in einer Einführöffnung 35 für Garn- oder Netzmaterial oder in einem Einführkanal 19 für Erntegut angeordnet und aus technischen Gründen mit weniger Rippen 42 bestückt sind. Dies ist jedoch nicht zwingend der Fall, so dass in anderen Ausführungsformen durchaus auch alle 18 Pressrollen 26 mit 12 Rippen besetzt sind. Ferner sei darauf hingewiesen, dass die Auswahl von 12 Rippen 42 hier als Beispiel gewählt wurde, weil damit die besten Ergebnisse für die Ballenpressdichte zu erwarten sind. Es sind aber auch überdurchschnittlich gute Ergebnisse mit 11 bzw. 13 Rippen 42 zu erwarten. Die in Figur 1 dargestellte Rundballenpresse 10 ist vorzugsweise mit einem Innendurchmesser DB für die Ballenpresskammer von 1,20m bis 1,40m ausgebildet, wobei insbesondere ein Innendurchmesser DB in einem Bereich von 1,25m bis 1,35m anzustreben ist, wobei ein Außendurchmesser DR von etwa 220mm für die Pressrollen 26 (gemessen in einem nicht mit Rippen 26 versehenen Bereich der Mantelfläche 38) vorgesehen sein sollte. Der genannte Außendurchmesser DR von 220mm ist jedoch nicht zwingend, da Abweichungen durchaus konstruktionsbedingt möglich sind, jedoch der Außendurchmesser DR für die Pressrollen 26 in einem Bereich von 200mm bis 240mm liegen sollte, da, wie schon eingehend erwähnt, auch der Außendurchmesser DR der Pressrollen 26 einen gewissen Einfluss auf die Größe der Presskammer 20, auf die Abstände der Rippen 42 auf der Mantelfläche 38 und auf der Ballenoberfläche (nicht gezeigt), auf den Abstand der Pressrollen zueinander und damit auch auf das Pressergebnis bzw. auf die Ballenpressdichte hat.

## Patentansprüche

1. Landwirtschaftliche Rundballenpresse (10) mit einer Ballenpresskammer (20) aus mehreren angetriebenen und über einen Umfang der Ballenpresskammer (20) angeordneten Pressrollen (26) mit einer zylindrischen Mantelfläche (38), wobei auf der Mantelfläche (38) der Pressrollen (26) Rippen (42) ausgebildet sind, die sich im Wesentlichen parallel zu der Rotationsachse (41) der Pressrolle erstrecken, **dadurch gekennzeichnet, dass** über dem Umfang der Ballenpresskammer (20) wenigstens 18 Pressrollen (26) angeordnet sind, wobei wenigstens einige der 18 Pressrollen (26) mit 11 bis 13 Rippen (42) ausgebildet sind.

2. Landwirtschaftliche Rundballenpresse (10) nach Anspruch 1, **dadurch gekennzeichnet, dass** wenigstens einige der 18 Pressrollen (26) mit 12 Rippen (42) ausgebildet sind.

3. Landwirtschaftliche Rundballenpresse (10) nach Anspruch 1 oder 2, **dadurch gekennzeichnet, dass** sich die Rippen (42) im Wesentlichen über die gesamte Länge der Pressrollen (26) erstrecken.

4. Landwirtschaftliche Rundballenpresse (10) nach einem der Ansprüche 1 bis 3, **dadurch gekennzeichnet, dass** die Ballenpresskammer (20) mit einem Innendurchmesser DB von 1,20m bis 1,40m ausgebildet ist.

5. Landwirtschaftliche Rundballenpresse (10) nach einem der Ansprüche 1 bis 4, **dadurch gekennzeichnet, dass** die Ballenpresskammer (20) mit einem Innendurchmesser (DB) von 1,25m bis 1,35m ausgebildet ist.

6. Landwirtschaftliche Rundballenpresse (10) nach einem der Ansprüche 1 bis 5, **dadurch gekennzeichnet, dass** die Mantelfläche (38) der Pressrollen (26) einen Außendurchmesser (DR) von etwa 200mm bis 240mm aufweist.

7. Landwirtschaftliche Rundballenpresse (10) nach einem der Ansprüche 1 bis 6, **dadurch gekennzeichnet, dass** die Mantelfläche (38) der Pressrollen (26) einen Außendurchmesser (DR) von etwa 220mm aufweist.
